# EUROPÄISCHE PATENTSCHRIFT

(11) **EP 1 418 014 B1**
(45) Veröffentlichungstag und Bekanntmachung des Hinweises auf die Patenterteilung: **02.04.2008**
(21) Anmeldenummer: 03025210.0
(22) Anmeldetag: 05.11.2003
(51) Int. Cl.: B23B 3/20, B23Q 1/01, B23Q 11/00, B23Q 7/04, B23Q 17/20, B23Q 7/00

(54) **Vertikale Drehmaschine mit horizontal bewegbarer Spindel**
Vertical lathe with horizontally movable spindle
Tour vertical avec broche mobile horizontalement

(30) Priorität: 11.11.2002 DE 10252710
(43) Veröffentlichungstag der Anmeldung: 12.05.2004
(73) Patentinhaber: J.G. Weisser Söhne, 78112 St. Georgen (DE)
(72) Erfinder: Weisser, Helmut, 78112 St. Georgen (DE)
(74) Vertreter: Patentanwälte Westphal, Mussgnug & Partner

(56) Entgegenhaltungen:
- DE-A- 3 416 660
- DE-A- 4 212 175
- DE-A- 4 303 916
- DE-A- 10 147 319
- DE-A- 10 237 191
- DE-A- 19 516 774
- US-B1- 6 276 245

## Beschreibung

Die Erfindung betrifft eine Drehmaschine gemäß dem Oberbergriff des Anspruchs 1. Eine solche Drehmaschine ist aus der DE 19 516 774 A1 bekannt.

Bei Drehmaschinen wird das Werkstück an einer motorisch angetriebenen Werkstück-Spindel gespannt und durch ein Werkzeug spanabhebend bearbeitet. Dabei ist ein Bearbeitungsvorschub zumindest in Richtung der Drehachse (Z-Achse)und in Richtung senkrecht zur Drehachse (X-Achse) notwendig. Bei der herkömmlichen Drehmaschine ist die Werkstück-Spindel stationär angeordnet und das Werkzeug ist mittels eines Kreuzschlittens gesteuert in der X-und der Z-Achse bewegbar.

Es sind auch Drehmaschinen bekannt, z.B. DE 34 16 660 C2 und DE 42 12 175 C2, die nach dem sogenannten Pick-up-Prinzip arbeiten. Bei diesen Drehmaschinen ist die Werkstück-Spindel vertikal angeordnet und das Werkstück wird hängend am unteren Ende der Werkstückspindel gespannt. Das Werkzeug ist stationär unterhalb der Werkstück-Spindel angeordnet. Die Werkstück-Spindel ist mittels eines Kreuzschlittens in der X- und Z-Achse verfahrbar. Der Bearbeitungsvorschub für die Drehbearbeitung wird durch die Werkstück-Spindel gegenüber dem ortsfesten Werkzeug durchgeführt. Die Verfahrbarkeit der Werkstück-Spindel wird außerdem dazu ausgenutzt, die Werkstück-Spindel aus dem Arbeitsraum, in welchem sie sich oberhalb des Werkzeuges und in der Bearbeitungsposition befindet, zu einer Lade-Entlade-Station zu verfahren, in welcher die Werkstück-Spindel mit ihrem Spannfutter ein zu bearbeitendes Werkstück aufnehmen und ein bearbeitetes Werkstück abgeben kann. Dadurch werden aufwendige Ladeeinrichtungen für die Zuführung und die Abführung der Werkstücke zu der Werkstück-Spindel vermieden.

Die DE 195 16 774 A1 offenbart eine Zweispindel-Drehmaschine mit zwei achsparallel zueinander angeordneten Werkstück-Spindeln, welche den beiden Werkstückspindeln zugeordnete Werkzeugträger mit Werkzeugen aufweist. Die Werkzeugträger und Werkstück-Spindeln sind relativ zueinander verfahrbar. Insbesondere sind die beiden Werkstück-Spindeln hängend in einem gemeinsamen Spindelgehäuse angeordnet, das in Spindelachsrichtung (Z-Richtung) und quer zur Spindelachsrichtung (X-Richtung) verfahrbar ist.

Da bei diesen bekannten Pick-up-Drehmaschinen der Kreuzschlitten das gesamte Gewicht der Arbeitsspindel und ihres Antriebsmotors mit hoher Präzision bewegen muss, muss dieser Kreuzschlitten aufwendig konstruiert sein. Außerdem beansprucht die vertikale Verfahrbarkeit der Werkstück-Spindel in der Z-Achse eine große Bauhöhe.

Der Erfindung liegt die Aufgabe zu Grunde, eine Drehmaschine zu schaffen, die einfach, kostengünstig und platzsparend aufgebaut ist.

Diese Aufgabe wird erfindungsgemäß gelöst durch eine Drehmaschine mit den Merkmalen des Anspruchs 1.

Vorteilhafte Ausführungen der Erfindung sind in den Unteransprüchen angegeben.

Bei der erfindungsgemäßen Drehmaschine ist die Werkstück-Spindel hängend angeordnet und wird nur in der X-Achse verfahren. Der Z-Vorschub für die Bearbeitung erfolgt durch das Werkzeug. Die Werkstück-Spindel kann durch ihre Bewegung in der X-Achse zwischen dem Arbeitsraum oberhalb des Werkzeuges und einer Lade- Entlade-Station verfahren werden, so dass die Drehmaschine nach dem Pick-up-Prinzip arbeiten kann und keine zusätzlichen Handlings-Einheiten für die Zuführung und Abführung der Werkstücke zu bzw. von der Werkstück-Spindel benötigt.

Da die Werkstück-Spindel nur in der X-Achse bewegt wird, genügt ein linearer Schlitten für die Bewegung der Werkstück-Spindel. Der Schlitten kann daher konstruktiv einfach und kostengünstig aufgebaut sein und gewährleistet auch bei einem größeren Gewicht von Werkstück-Spindel und deren Antrieb eine hohe Präzision. Auch für die Bewegung des Werkzeugträgers in der Z-Achse genügt ein linearer Schlitten, so dass auch hier eine kostengünstige Konstruktion möglich ist. Da der X-Schlitten für die Werkstück-Spindel und der Z-Schlitten für das Werkzeug von einander getrennt sind, werden auch der Antrieb und der Steuerung dieser Schlitten vereinfacht.

Die Werkstück-Spindel wird nicht in der vertikalen Z-Achse bewegt, so dass die Drehmaschine oberhalb der Werkstück-Spindel keinen zusätzlichen Freiraum benötigt und mit geringer Bauhöhe realisiert werden kann.

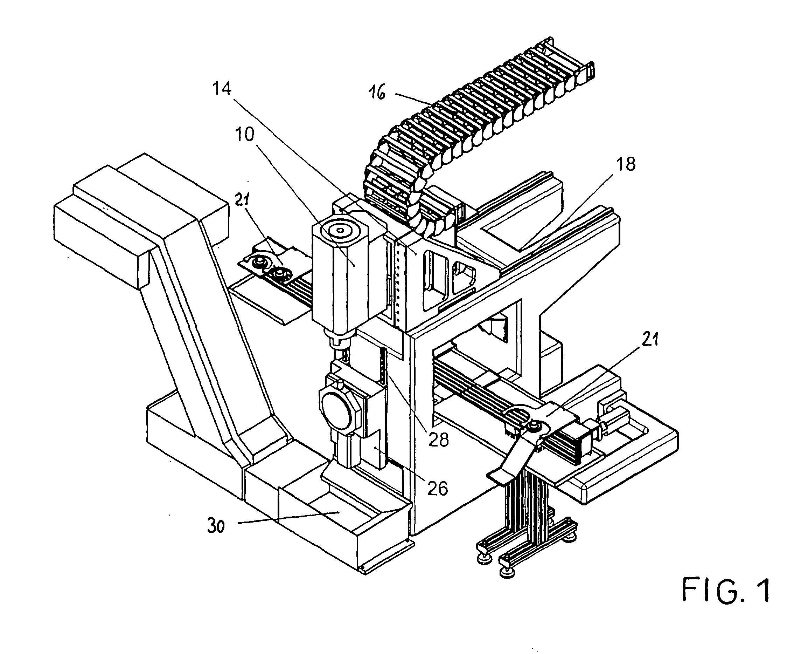

Im Folgenden wird die Erfindung anhand eines in der Zeichnung dargestellten Ausführungsbeispiels näher erläutert. Dabei zeigen
- Figur 1: eine perspektivische Ansicht der Drehmaschine,

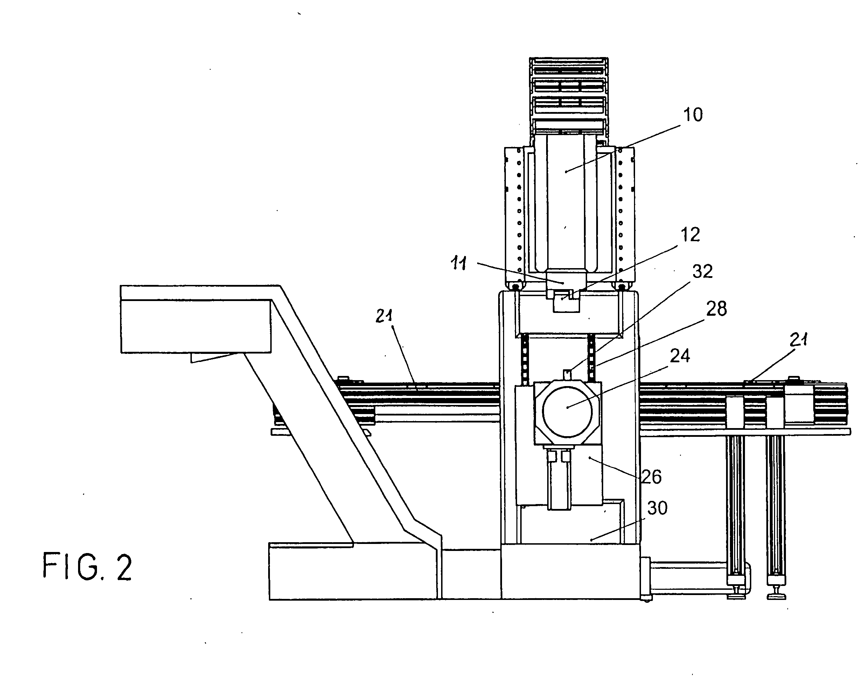

- Figur 2: eine Frontansicht der Drehmaschine und

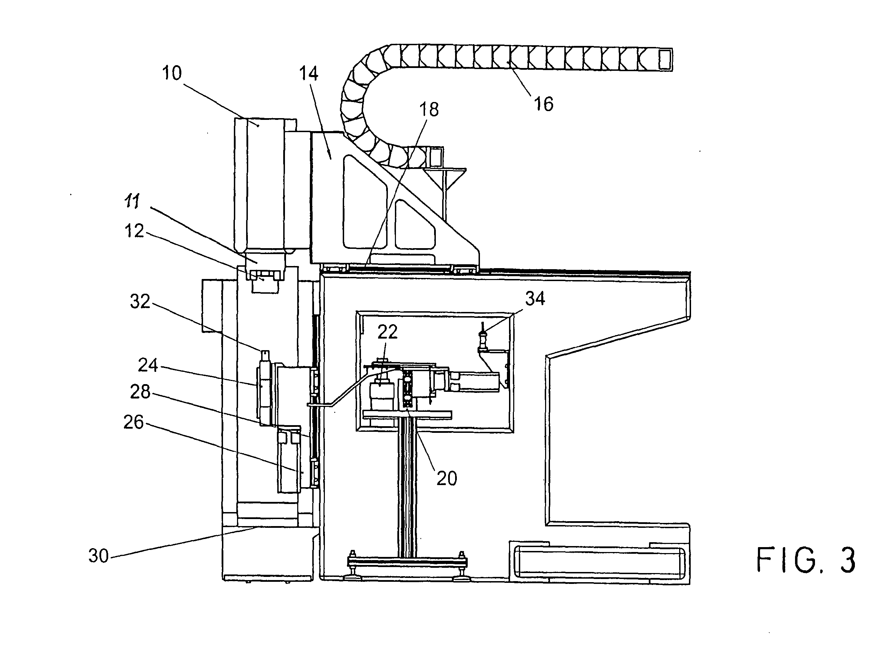

- Figur 3: eine Seitenansicht der Drehmaschine.

Bei der erfindungsgemäßen Drehmaschine ist die Werkstück-Spindel 10 vertikal angeordnet und das zu bearbeitende Werkstück 12 wird am unteren Ende der Werkstück-Spindel 10 hängend gespannt. Die als elektrisch angetriebene Motorspindel ausgebildete Werkstück-Spindel 10 ist in einem Spindelschlitten 14 angeordnet, der horizontal in der X-Achse geführt bewegbar ist. Die Stromversorgung der Werkstück-Spindel 10 erfolgt über einen Schleppkanal 16.

Mittels des in der X-Führung 18 verfahrbaren Spindelschlittens 14 ist die Werkstück-Spindel 10 horizontal verfahrbar zwischen einer in der Zeichnung dargestellten Arbeitsposition und einer Lade-Entlade-Station. In der Lade-Entlade-Station befindet sich das Spannfutter 11 der Werkstück-Spindel 10 über einer Werkstück-Zuführung und -Abführung 20, in welcher die zu bearbeitenden Werkstücke über Transportbahnen 21 oder Paletten zugeführt und die bearbeiteten Werkstücke abgeführt werden. Die Werkstück-Zuführung und -Abführung 20 weist Hebeeinrichtungen 22 auf, die die Werkstücke 12 vertikal aus der Transportbahn bzw. der Palette 21 ausheben und in das Spannfutter 11 der darüber angeordneten Werkstück-Spindel 10 einsetzen bzw. das bearbeitete Werkstück aus dem Spannfutter 11 entnehmen und in die Transportbahn 21 bzw. Palette ablegen.

In dem Arbeitsraum ist ein Werkzeugträger angeordnet, der als Einzel-Werkzeugträger ausgebildet sein kann. Vorzugsweise ist der Werkzeugträger als Werkzeug-Revolver 24 ausgebildet, z.B. als Flach-Revolver oder Kronen-Revolver. Der Werkzeug-Revolver 24 ist um eine horizontale Achse geschaltet drehbar, wobei diese horizontale Achse vorzugsweise parallel zur X-Achse verläuft. Der Werkzeug-Revolver 24 ist auf einem Werkzeugschlitten 26 angeordnet, der in einer vertikalen Z-Führung 28 in vertikaler Z-Achse verfahrbar ist.

In der Arbeitsposition befindet sich die Werkstück-Spindel 10 oberhalb des Werkzeug-Revolvers 24, so dass bei der Drehbearbeitung die Späne und das Kühl-Schmiermittel frei nach unten in eine Spänaufnahme 30 fallen können.

In der Werkstück-Zuführung-Abführung 20 werden die zu bearbeitenden Werkstücke 12 mittels der Transportbahn 21 bzw. auf einer Palette zugeführt. Die Werkstück-Spindel 10 wird in der X-Achse über die Werkstück-Zuführung-Abführung 20 gefahren. Ein zu bearbeitendes Werkstück wird mittels der Aushebeeinrichtung 22 in das Spannfutter 11 der Werkstück-Spindel 10 geladen. Dann wird die Werkstück-Spindel 10 in der X-Achse in die Arbeitsposition bewegt, so dass sich das zu bearbeitende Werkstück 12 oberhalb des Werkzeug-Revolvers 24 befindet. Nun erfolgt die Drehbearbeitung mittels des Werkzeugs 32. Der radiale X-Vorschub für die Drehbearbeitung erfolgt gesteuert über die Bewegung des Spindelschlittens 14. Der axiale Z-Vorschub für die Drehbearbeitung erfolgt gesteuert über die Bewegung des Werkzeugschlittens 26. Nach Beendigung der Drehbearbeitung wird der Spindelschlitten14 wieder über die Werkstück-Zuführung-Abführung 20 gefahren, wo das bearbeitete Werkstück aus dem Spannfutter 11 der Werkstück-Spindel 10 auf die Aushebeeinrichtung 22 abgelegt und durch diese auf die Transportbahn 21 bzw. die Palette abgelegt wird.

Gegebenenfalls kann auf der von der Arbeitsposition abgewandten Seite hinter der Werkstück-Zuführung-Abführung 20 noch eine Messstation vorgesehen sein, in welcher das bearbeitete Werkstück 12 durch einen Messtaster 34 abgetastet und gemessen werden kann. Das in dem Spannfutter 11 der Werkstückspindel 20 gespannte Werkstück 12 wird ebenfalls mittels des Spindelschlittens 14 in der X-Führung 18 an den Messtaster 34 angefahren.

## Patentansprüche

1. Drehmaschine mit einer vertikalen Werkstück-Spindel (10), an deren unterem Ende das Werkstück (12) hängend gespannt wird, und mit einem in einem Arbeitsraum unterhalb der Werkstück-Spindel (10) angeordneten Werkzeugträger (24), der in vertikaler Z-Achse verfahrbar ist, wobei die Werkstück-Spindel (10) zwischen einer Arbeitsposition, in welcher sich die Werkstück-Spindel (10) oberhalb des Werkzeugträgers (24) in dem Arbeitsraum befindet, und einer Lade-Entlade-Station (20), in welcher die Werkstücke (12) in das Spannfutter (11) geladen bzw. aus dem Spannfutter (11) entladen werden, verfahrbar ist **dadurch gekennzeichnet, dass** die Werkstück-Spindel (10) nur in X-Achse horizontal verfahrbar ist .

2. Drehmaschine nach Anspruch 1,
**dadurch gekennzeichnet, dass** die Lade-Entlade-Station (20) wenigstens eine Hebeeinrichtung (22) aufweist, die die Werkstücke (12) aus einer Transportbahn (21) bzw. einer Palette aushebt und in das Spannfutter (11) der Werkstück-Spindel (10) einsetzt bzw. aus diesem Spannfutter (11) entnimmt.

3. Drehmaschine nach Anspruch 1 oder 2,
**dadurch gekennzeichnet, dass** der Werkzeugträger als Werkzeug-Revolver (24) ausgebildet ist, der um eine horizontale, vorzugsweise zur X-Achse parallele Achse geschaltet drehbar ist.

4. Drehmaschine nach einem der Ansprüche 1 bis 3,
**dadurch gekennzeichnet, dass** auf der von der Arbeitsposition abgewandten Seite der Lade-Entlade-Station (20) eine Messstation für das bearbeitete Werkstück vorgesehen ist.

5. Drehmaschine nach Anspruch 4;
**dadurch gekennzeichnet, dass** die Messstation einen das Werkstück (12) abtastenden und messenden Messtaster (34) aufweist und dass das in dem Spannfutter (11) der Werkstück-Spindel (10) gespannte Werkstück (12) durch Verfahren der Werkstück-Spindel (10) in der X-Achse an den Messtaster (34) bewegbar ist.

## Claims

1. A lathe having a vertical workpiece spindle (10), on the lower end of which the workpiece (12) is suspended, and having a tool holder (24) that is disposed in a working chamber beneath the workpiece spindle (10) and travels in the vertical Z axis, wherein the workpiece spindle (10) travels between an operating position, in which the workpiece spindle (10) is situated above the workpiece holder (24) in the working chamber, and a loading/unloading station (20), in which the workpieces (12) are loaded into the chuck (11) and are unloaded from the chuck (11),
**characterised in that** the workpiece spindle (10) travels horizontally only in the X axis.

2. A lathe according to Claim 1,
**characterised in that** the loading/unloading station (20) comprises at least one lifting device (22), which lifts the workpieces (12) out of a transport path (21) or a palette and inserts them into the chuck (11) of the workpiece spindle (10) or removes them from said chuck (11).

3. A lathe according to Claim 1 or 2,
**characterised in that** the tool holder is designed as a tool revolver (24), which is rotatable in stages about a horizontal axis that is preferably parallel to the X axis.

4. A lathe according to one of Claims 1 to 3,
**characterised in that** a gauging station for the machined workpiece is provided on the side of the loading/unloading station (20) facing away from the operating position.

5. A lathe according to Claim 4,
**characterised in that** the gauging station comprises a measuring probe (34) that gauges and measures the workpiece (12)
and **in that** the workpiece (12) clamped in the chuck (11) of the workpiece spindle (10) can be moved by moving the workpiece spindle (10) in the X-axis to the measuring probe (34).

## Revendications

1. Tour équipé d'une broche porte-pièce (10), verticale, dont l'extrémité inférieure reçoit la pièce (12) en position suspendue, ainsi qu'un porte-outil (24) installé dans l'espace de travail sous la broche porte-pièce (10), ce porte-outil étant mobile dans la direction de l'axe vertical Z, la broche porte-outil (10) étant mobile entre une position de travail dans laquelle la broche (10) se trouve au-dessus du porte-outil (24) dans l'espace de travail et un poste de chargement/ déchargement (20) dans lequel les pièces (12) sont chargées dans le mandrin (11) ou sont déchargées du mandrin (11),
**caractérisé en ce que**
la broche porte-pièce (10) est mobile seulement horizontalement suivant l'axe X.

2. Tour selon la revendication 1,
**caractérisé en ce que**
le poste de chargement/déchargement (20) comporte au moins une installation de levage (22) qui soulève les pièces (12) d'un chemin de transport (21) ou d'une palette et les place dans le mandrin (11) de la broche porte-pièce (10) ou les extrait de ce mandrin (11).

3. Tour selon la revendication 1 ou 2,
**caractérisé en ce que**
le porte-pièce est un porte-pièce révolver (24) tournant autour d'un axe horizontal, de préférence parallèle à l'axe X.

4. Tour selon l'une des revendications 1 à 3,
**caractérisé en ce que**
un poste de mesure de la pièce usinée est prévu du côté du poste de chargement/ déchargement (20), à l'opposé de la position de travail.

5. Tour selon la revendication 4,
**caractérisé en ce que**
le poste de mesure comporte un palpeur (34) détectant et mesurant la pièce (12) et la pièce (12) serrée dans le mandrin (11) de la broche porte-pièce (10) est mobile dans la direction de l'axe X par rapport au palpeur (34) par déplacement de la broche porte-pièce (10).
